# EUROPEAN PATENT SPECIFICATION

(11) **EP 3 321 714 B1**
(45) Date of publication and mention of the grant of the patent: **26.02.2020**
(21) Application number: 16821171.2
(22) Date of filing: 10.06.2016
(51) Int. Cl.: G01T 1/20, G01T 1/02

(54) **RADIATION MONITOR**
STRAHLUNGSMONITOR
DISPOSITIF DE SURVEILLANCE DE RAYONNEMENTS

(30) Priority: 06.07.2015 JP 2015135614
(43) Date of publication of application: 16.05.2018
(73) Proprietor: Hitachi, Ltd., Tokyo 100-8280 (JP)
(72) Inventor: TADOKORO, Takahiro, Tokyo 100-8280 (JP); TOMINAGA, Kazuo, Tokyo 100-8280 (JP); UENO, Katsunori, Tokyo 100-8280 (JP); OKADA, Kouichi, Tokyo 100-8280 (JP); NAGUMO, Yasushi, Tokyo 100-8280 (JP); KUWABARA, Hitoshi, Tokyo 100-8280 (JP); SASAKI, Keisuke, Tokyo 100-8280 (JP)
(74) Representative: MERH-IP Matias Erny Reichl Hoffmann Patentanwälte PartG mbB
(86) International application number: PCT/JP2016/067301
(87) International publication number: WO 2017/006700

(56) References cited:
- JP-A- H02 236 191
- JP-A- H04 160 330
- JP-A- H04 160 330
- JP-A- H06 258 446
- JP-A- 2001 056 381
- JP-A- 2002 082 171
- JP-A- 2005 156 158
- JP-A- 2006 083 325
- US-A1- 2013 248 721
- US-A1- 2015 083 923

## Description

### Technical Field

The present invention relates to a radiation monitor.

### Background Art

As a monitor for measuring the dosage rate of radiation, a radiation monitor using an ionization chamber and a radiation monitor using a scintillation element are well-known.

In such a radiation monitor using an ionization chamber as mentioned above, the ionization of gas in the ionization chamber caused by incident radiation is used, and the dosage rate of the radiation can be easily measured through the measurement of a current generated by a voltage applied to the ionization chamber.

On the other hand, in a radiation monitor using a scintillation element, the light emission of the element caused by incident radiation is used. The intensity of the emitted light is measured by a photoelectron multiplier tube as a current, and the dosage rate of the radiation is derived using the value of the current (refer to, for example, Patent Literature 1).

US 2013 248721 A1 describes a method for real time and dose rate measuring in an environment exposed to a radiation source.

US 2015/083923 A1 describes a nano scintillator that includes one nanocrystal comprising a rare earth element, a lanthanide dopant and a spectator dopant, wherein the nanocrystal exhibits a linear luminescence emission response to stimulating electromagnetic radiation of wavelength less than 100 nm.

JP H04 160330 A describes an apparatus determining the relative emission intensity of an emission line with a specific wavelength range out of an emission spectrum obtained by excitation of a specific praseodymium-activated fluorophore.

### Citation List

### Patent Literature

Patent Literature 1: Japanese Unexamined Patent Application Publication No. 2009-36752
Patent Literature 2: US 2013 248721 A1
Patent Literature 3: US 2015/083923 A1
Patent Literature 4: JP H04 160330 A

### Summary of Invention

### Technical Problem

However, in such a radiation monitor using an ionization chamber as mentioned above, since the interaction between radiation and gas is weak, a large-sized ionization chamber is required, and in addition to that, if hydrogen gas or the like is present, there is the risk of explosions and the like because a high voltage is applied to the ionization chamber, so that it is difficult to use the large-sized ionization chamber for measuring radiation.

On the other hand, in the conventional radiation monitor using a scintillation element, electrical signals overlap each other when a high dosage rate of radiation is measured, which makes it difficult to accurately measure the high dosage rate of radiation. It will be thinkable to cover the surrounding area of the above element with a radiation shielding material such as lead or the like in order to inhibit electrical signals from overlapping each other. In this case, however, the radiation monitor itself becomes very large and heavy, so that it cannot be said that the simplicity of the measurement using this radiation monitor is sufficient.

The present invention has been achieved on the basis of abovementioned situation, and the purpose of the present invention is to provide a radiation monitor that can easily and accurately measure the dosage rate of radiation while inhibiting the risk of explosions and the like, and that can also measure the temperature of a radiation light emitting element itself.

### Solution to Problem

The present invention relates to any of
(1) a radiation monitor including:
   a radiation light emitting element that contains a rare earth element and that emits light of plural wavelengths caused by incident radiation;
   an optical fiber that is connected to the radiation light emitting element and that transmits the light emitted from the radiation light emitting element;
   an electrical pulse converter that is connected to the optical fiber and that converts the transmitted light to electrical pulses at each wavelength;
   an electrical pulse detector that is connected to the electrical converter and that measures the counting rate of electrical pulses at each wavelength using the electrical pulses sent out from the electrical pulse converter; and
   an analyzer that is connected to the electrical pulse detector and that computes the dosage rate of radiation and the temperature of the radiation light emitting element by collating the counting rate of electrical pulses measured at each wavelength and the relationship of the counting rate of photons to the temperature of the radiation light emitting element and the dosage rate of radiation stored in a database in advance,
(2) the radiation monitor according to (1), wherein the radiation light emitting element includes plural kinds of rare earth elements that are different from each other and emit lights of different wavelengths by means of incident radiation,
(3) the radiation monitor according to (2), wherein the plural kinds of rare earth elements are housed in different housings respectively,
(4) the radiation monitor according to (2), wherein the plural kinds of rare earth elements are housed in a single housing,
(5) the radiation monitor according to any of (1) to (4), further including a wavelength selection filter that is installed around the middle of the optical fiber and that passes only light of a predefined wavelength emitted from the radiation light emitting element,
(6) the radiation monitor according to any of (1) to (4), further including a spectroscope that is installed around the middle of the optical fiber and that disperses the light emitted from the radiation light emitting element, and
(7) the radiation monitor according to any of (1) to (6), further including a light attenuating filter that is installed around the middle of the optical fiber and that attenuates the light emitted from the radiation light emitting element by a predefined ratio so that the intensity of the light falls within a predefined intensity range.

Here, "the counting rate of electrical pulses" means the number of electrical pulses per unit time, and "the counting rate of photons" means the number of photons generated per unit time. Furthermore, "light of a predefined wavelength" means light of each wavelength used for measuring the dosage rate of radiation and the like. In addition, "a predefined intensity range" means an intensity range of light that is properly converted by an electrical pulse converter and that can be properly counted by an electrical pulse detector, and "a predefined ratio" means a ratio defined in advance.

### Advantageous Effects of Invention

The present invention can provide a radiation monitor that can easily and accurately measure the dosage rate of radiation while inhibiting the risk of explosions and the like and that can also measure the temperature of a radiation light emitting element itself. Therefore, the abovementioned radiation monitor can be suitably used as a monitor for monitoring the radiation and temperature of a nuclear reactor.

### Brief Description of Drawings

Fig. 1 is a schematic diagram showing a first embodiment of the present invention.
Fig. 2 is a schematic diagram showing the generation process of photons (light) caused by incident radiation.
Fig. 3 is an enlarged schematic cross-sectional view of the radiation light emitting element shown in Fig. 1.
Fig. 4 is a schematic diagram showing an example of the relationship of the dosage rate of radiation to the counting rate of photons.
Fig. 5 is a schematic diagram showing an example of the generation rate of photons (light) that is generated by a radiation light emitting element at each wavelength.
Fig. 6 is an overview flowchart for explaining a method for deriving a dosage rate and a temperature.
Fig. 7 is a schematic diagram showing a second embodiment of the present invention.
Fig. 8 is a schematic diagram showing a third embodiment of the present invention.
Fig. 9 is a schematic diagram showing a fourth embodiment of the present invention.

### Description of Embodiments

A radiation monitor according to the present invention includes:
a radiation light emitting element that contains a rare earth element and that emits light of plural wavelengths by means of incident radiation;
an optical fiber that is connected to the radiation light emitting element and that transmits the light emitted from the radiation light emitting element;
an electrical pulse converter that is connected to the optical fiber and that converts the transmitted light to electrical pulses at each wavelength;
an electrical pulse detector that is connected to the electrical pulse converter and that measures the counting rate of electrical pulses at each wavelength using the electrical pulses sent out from the electrical pulse converter; and
an analyzer that is connected to the electrical pulse detector and that computes the dosage rate of radiation and the temperature of the radiation light emitting element by collating the counting rate of electrical pulses measured at each wavelength and the relationship of the counting rate of photons to the temperature of the radiation light emitting element and the dosage rate of radiation stored in a database in advance.

Here, rare earth elements used for the radiation monitor of the present invention are a combination of some elements properly selected in accordance with an embodiment to be implemented among ytterbium, neodymium, cerium, praseodymium, and the like.

Hereinafter, although the radiation monitors of embodiments according to the present invention will be explained with reference to the accompanying drawings, the present invention is not limited only to the embodiments described in these accompanying drawings.

### First Embodiment

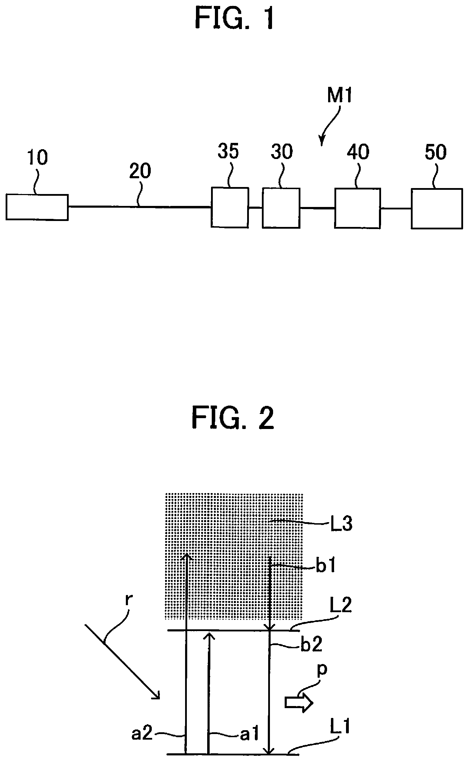

Fig. 1 is a schematic diagram showing a first embodiment of the present invention. Schematically speaking, the radiation monitor M1 includes: a radiation light emitting element 10; an optical fiber 20; a wavelength selection filter 35; an electrical pulse converter 30; an electrical pulse detector 40; and an analyzer 50 as shown in Fig. 1. Here, radiation that can be measured by the radiation monitor M1 is an electromagnetic wave such as X radiation or γ radiation, or corpuscular radiation such as α radiation, β radiation, or neutron radiation.

The radiation light emitting element 10 includes a rare earth element, and emits light of plural wavelengths by means of incident radiation.

The mechanism of light emission performed by the radiation light emitting element 10 will be explained below. Fig. 2 is a schematic diagram showing the generation process of photons (light) caused by incident radiation. As shown in Fig. 2, when radiation r comes into the radiation light emitting element 10, rare earth atoms and the like in the light emitting unit 11 (mentioned later) of the radiation light emitting element 10 transit to excited states having higher energy levels (for example, energy levels L2 and L3) with the use of energy possessed by this radiation r (refer to arrows a1 and a2 in Fig. 2).

On the other hand, when rare earth atoms and the like that are located at excited states having higher energies (for example, energy levels L2 and L3) transit to an excited state having a lower energy and the ground state (for example, an energy level L1 and the energy level L2) (refer to arrows b1 and b2 in Fig. 2), differences among those energy levels are emitted in the forms of photons p having energies equivalent to the differences.

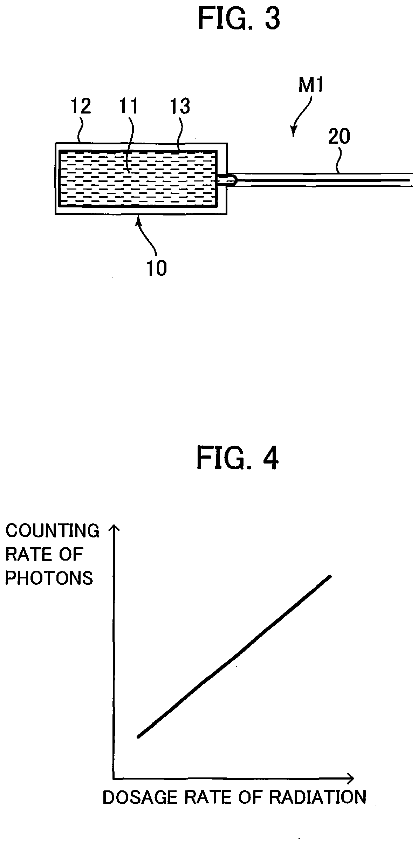

As shown in Fig. 3, schematically speaking, the abovementioned radiation light emitting element 10 includes a light emitting unit 11, a housing 12, and an intermediate member 13.

The light emitting unit 11 is a member including the abovementioned rare earth element. The light emitting unit 11 is composed of an optically transparent member as its base material, and a rare earth element included in this optically transparent member. As the abovementioned optically transparent member, transparent yttrium aluminum garnet or the like can be cited, for example. Furthermore, the rare earth material of this embodiment is composed of a single rare earth material that emits light of plural wavelengths. As the abovementioned rare earth element, ytterbium, neodymium, cerium, praseodymium, or europium is preferable.

As mentioned above, since the light emitting unit 11 includes a rare earth element, the radiation monitor M1 can have improved linearity between the dosage rate of incident radiation and the intensity of light emitted from the light emitting unit 11, and therefore, even if the dosage rate of the incident radiation is high, the dosage rate of the radiation can be measured more accurately.

The housing 12 is a container that houses the light emitting unit 11. A material of which the housing 12 is made is not limited to a specific material, and can be any material as long as it is a material through which radiation that is a measurement object can pass. For example, aluminum can be adopted as a material for the housing 12.

The intermediate member 13 is a member that is installed between the housing 12 and the light emitting member 11 and whose heat radiation rate is smaller than that of the inside of the housing 12. In this embodiment, the intermediate member 13 is made of thin films that are laminated and each of which is formed in the shape of a mirror surface on the inside of the housing 12. As a material of which the intermediate member 13 is made, gold, silver, or the like can be cited. In this way, light emission caused by heat radiation generated in the housing 12 can be reduced, which makes it possible to more accurately measure the dosage rate of radiation.

The optical fiber 20 is a medium that is connected to the radiation light emitting element 10 and that transmits the light emitted from the radiation light emitting element 10. This optical fiber 20 is connected to the radiation light emitting element 10 and the wavelength selection filter 35 to be described later. Although quartz or plastic can be cited as a material of which the optical fiber 20 is made, quartz is considered to be more suitable in view of the prevention of the degradation of the material under the high dosage rate of radiation and the trend of the optical fiber having become used for longer distance transmission.

The wavelength selection filter 35 is installed around the middle of the optical fiber 20, and that passes only light of a predefined wavelength emitted from the radiation light emitting element 10. As the wavelength selection filter 35, a dielectric multilayer film filter, a color filter, or the like can be adopted, for example. Owing to the wavelength selection filter installed as mentioned above, the radiation monitor M1 can convert, in the electrical pulse converter 30, lights of plural wavelengths into electrical pulses corresponding to the respective lights of the plural wavelengths, which makes it possible to more accurately measure the dosage rate.

The electrical pulse converter 30 is a converter that is connected to the optical fiber 20 and that converts the transmitted light to electrical pulses at each wavelength. The electrical pulse converter 30 sends out one electrical pulse for one incoming photon. As the electrical pulse converter 30, a photoelectron multiplier tube, an avalanche photodiode, or the like can be adopted, for example. With the use of this photoelectron multiplier tube or the like, light (photons) can be converted to electrical pulses with their current amplified.

The electrical pulse detector 40 is a detector that is connected to the electrical pulse converter 30 and that measures the counting rate of electrical pulses at each wavelength using the electrical pulses sent out from the electrical pulse converter 30. As the electrical pulse detector 40, an oscilloscope can, or the like can be adopted, for example.

The analyzer 50 is an instrument that is connected to the electrical pulse detector 40 and that computes the dosage rate of radiation and the temperature of the radiation light emitting element 10 by collating the counting rate of electrical pulses measured at each wavelength and the relationship of the counting rate of photons to the temperature of the radiation light emitting element 10 and the dosage rate of the radiation stored in a database in advance. To put it concretely, the analyzer 50 includes: a storage device having a database in which the counting rates of photons, which are caused by heat radiation and by radiation and each of which corresponds to a wavelength specified by the temperature of a radiation light emitting element 10 and the dosage rate of the radiation, are stored; and a computing device that computes the dosage rate of the radiation and the temperature of the radiation light emitting element from the counting rate of electrical pulses measured at each wavelength using the abovementioned database (neither is shown).

Here, the abovementioned relationship of the counting rate of photons measured at each wavelength to the temperature of a radiation light emitting element 10 and the dosage rate of radiation varies in accordance with the shape and material quality of the radiation light emitting element 10 to be used, the gauge and length of the optical fiber 20 to be used, and the like, and therefore relationships for respective radiation monitors M are stored in the database.

The analyzer 50 is not necessarily limited to a special device as long as it can compute the dosage rate of radiation and the temperature of a radiation light emitting element 10 from the counting rate of electrical pulses measured at each wavelength. For example, an arithmetic processing unit such as a personal computer having the abovementioned function can be adopted. In addition, it is conceivable that the analyzer 50 includes a display device for displaying the computed dosage rate of radiation.

Here, a reason why the dosage rate of radiation can be computed from the abovementioned counting rate of electrical pulses will be explained below. The inventors have found out that there is a one-to-one corresponding relationship between the dosage rate of radiation and the counting rate of the relevant photos as shown in Fig. 4 on the basis of experiments. On the other hand, it is well known that there is a one-to-one corresponding relationship between the abovementioned counting rate of photos and the counting rate of the relevant electrical pulses. Therefore, since it is evident that there is a one-to-one corresponding relationship between the dosage rate of radiation and the counting rate of the relevant electrical pulses, it becomes possible to convert the obtained counting rate of the electrical pulses into the dosage rate of the radiation.

Next, the behavior of the radiation monitor M1 will be explained. First, the radiation light emitting element 10 of the radiation monitor M1 is held up to a radiation source that is a measurement object, and radiation emitted from the radiation source is brought in by the radiation light emitting element 10. Subsequently, light (photons p) of plural wavelengths emitted from a rare earth element or the like is transmitted to the electrical pulse converter 30 via the optical fiber 20 and the wavelength selection filter 35, and the transmitted light is converted into electrical pulses at each wavelength by the electrical pulse converter 30.

Next, with the use of the electrical pulses sent out from the electrical pulse converter 30, the counting rate of the electrical pulses for each wavelength are measured by the electrical pulse detector 40, and then the temperature of the radiation light emitting element 10 and the counting rate of the radiation is computed using the obtained counting rate of the electrical pulses.

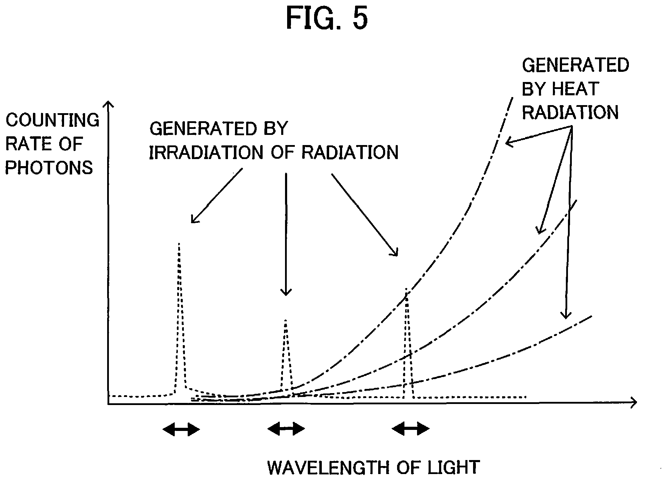

In this case, as shown in Fig. 5, the counting rate of photons generated by the irradiation of radiation emitted from the radiation light emitting element 10 has a constant relationship with each wavelength if the dosage rate of the radiation emitted to the radiation light emitting element 10 is constant regardless of the temperature of the radiation light emitting element 10 (refer to dashed lines in Fig. 5). On the other hand, the counting rate of photons generated by heat radiation emitted from the radiation light emitting element 10 varies in accordance with the temperature of the radiation light emitting element 10 (refer to one-dot chain lines in Fig. 5). Therefore, the relationships among the counting rates of photons that are within wavelength ranges different from each other and that are obtained by measuring the counting rate of photons at each wavelength are collated with reference to the database, so that the counting rates of photons caused by the heat radiation, the counting rates of photons caused by the radiation, the temperature of the radiation light emitting element 10, and the dosage rate of the radiation can be computed.

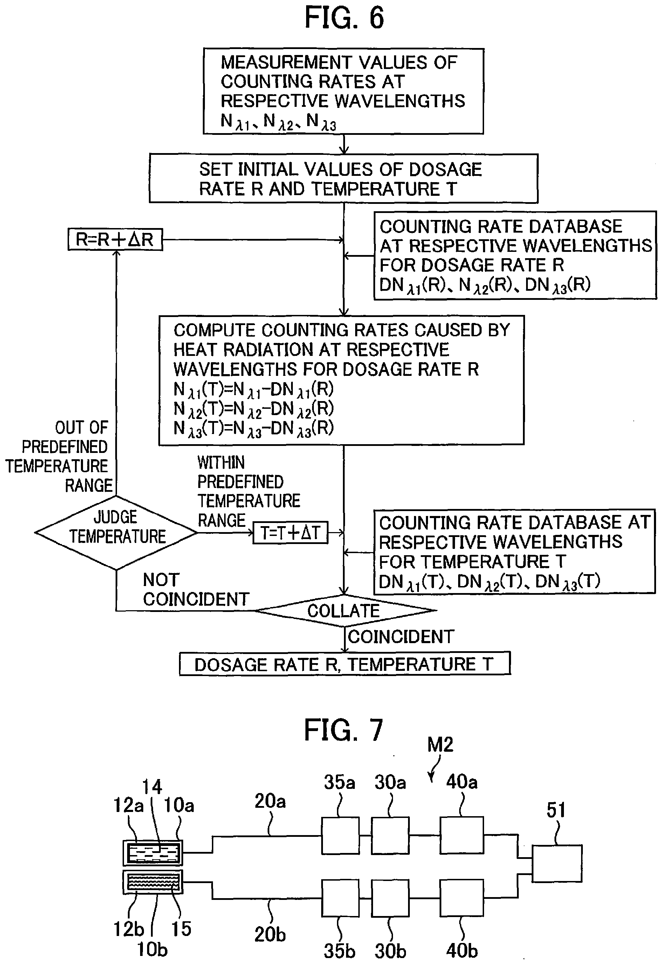

Next, an example of the above deriving method of a temperature and dosage rates will be explained with reference to Fig. 6. This example shows a method for deriving a dosage rate and a temperature using counting rates N_{λ1}, N_{λ2}, and N_{λ3} of photons measured at three different wavelengths λ1, λ2, and λ3 respectively.

First, after the initial values (temporary values) of the dosage rate R and the temperature T are set, counting rates N_{λ1}(T), N_{λ2}(T), and N_{λ3}(T) at wavelengths λ1, λ2, and λ3 respectively under the assumption that the dosage rate is R are derived by subtracting counting rates DN_{λ1}(R), DN_{λ2}(R), and DN_{λ3}(R), which are caused by radiation, at the respective wavelengths for the dosage rate R stored in the abovementioned database from the counting rates N_{λ1}, N_{λ2}, and N_{λ3} respectively. Here, it is assumed that the above initial values are arbitrary values within the range of dosage rates and the range of temperatures stored in the abovementioned database respectively.

Next, the derived counting rates N_{λ1}(T), N_{λ2}(T), and N_{λ3}(T) are respectively collated with the counting rates DN_{λ1}(T), DN_{λ2}(T), and DN _{λ3}(T), which are caused by radiation, at the respective wavelengths λ1, λ2, and λ3 for the dosage rate R and the temperature T stored in the abovementioned database.

As a result of the above collation, if the counting rates DN_{λ 1}(T), DN_{λ2}(T), and DN_{λ3}(T) coincide with the counting rates N_{λ1}(T), N _{λ1}(T), and N_{λ3}(T) respectively, it is judged that the dosage rate is R and the temperature is T. On the other hand, if the counting rates do not coincide with each other, it is judged whether or not the temperature T is within the range of temperatures stored in the database, and if the temperature T is within the range of temperatures, T is replaced with T+ΔT (ΔT is a temperature step defined in the database), and the counting rate DN_{λ1}(T), DN_{λ2}(T), and DN_{λ3}(T) caused by the heat radiation at wavelengths λ1, λ2, and λ3 for the dosage rate R and the new temperature T are collated with the counting rate N_{λ1}(T), N_{λ2}(T), and N_{λ3}(T) respectively. If these counting rates coincide with each other respectively, the dosage rate R and the temperature T are adopted as the computing results.

In the case where the above counting rates do not coincide with each other respectively and the temperature T is out of the range of temperatures stored in the database, R is replaced with R+ΔR (ΔR is a dosage step defined in the database), and counting rates N_{λ1}(T), N _{λ2}(T), and N_{λ3}(T), which are caused by the heat radiation, at the respective wavelengths λ1, λ2, and λ3 under the assumption that the dosage rate is R are derived by subtracting counting rates DN_{λ1}(R), DN _{λ2}(R), and DN_{λ3}(R) that are caused by the radiation at the wavelengths for the new dosage rate R and that are stored in the above database from the counting rates N_{λ1}, N_{λ2}, and N_{λ3} respectively. Subsequently, while the temperature T is continued to be replaced with T+ΔT, counting rates DN_{λ1}(R), DN_{λ2}(R), and DN_{λ3}(R) that are caused by the radiation at wavelengths λ1, λ2, and λ3 for the dosage rate R and the temperature T are repeatedly collated with the counting rates N_{λ1}(T), N_{λ2}(T), and N_{λ3}(T) respectively. If these counting rates coincide with each other respectively, the dosage rate R and the new temperature T are adopted as the computing results. The computing results adopted as above are measurement values of the dosage rate R and the temperature T.

As described above, by collating the counting rates DN_{λ1}(T), DN _{λ2}(T), and DN_{λ3}(T) with the counting rates N_{λ1}(T), N_{λ2}(T), and N_{λ3}(T) respectively, it becomes possible that the radiation monitor M1 measures the accurate dosage rate that does not include the dosage rate caused by heat radiation emitted by the radiation light emitting element 10 itself, and at the same time, measures the temperature of the radiation light emitting element 10 itself.

As is clear from the above, since the radiation monitor M1 includes the radiation light emitting element 10, the optical fiber 20, the electrical pulse converter 30, the electrical pulse detector 40, and the analyzer 50, the radiation monitor M1 can easily and accurately measure the dosage rate of radiation while inhibiting the risk of explosions and the like, and can also measure the temperature of the radiation light emitting element 10 itself.

Furthermore, in a nuclear reactor of which high safety is required, the diversification and multiplexing of various measurements (for example, the measurements of the temperature, the dosage rate, the hydrogen concentration, the water level in the nuclear reactor) are important. Therefore, the radiation monitor M1 that can measure a dosage rate and a temperature using single means is especially suitable for a radiation and temperature monitor for a nuclear reactor.

### Second Embodiment

Fig. 7 is a schematic diagram showing a second embodiment of the present invention. Schematically speaking, as shown in Fig. 7, a radiation monitor M2 according to the second embodiment includes: a first radiation light emitting element 10a and a second radiation light emitting element 10b as radiation light emitting elements; a first optical fiber 20a and a second optical fiber 20b as optical fibers; a first electrical pulse converter 30a and a second electrical pulse converter 30b as electrical pulse converters; and a first electrical pulse detector 40a and a second electrical pulse detector 40b as electrical pulse detectors. In addition, the radiation monitor M2 includes an analyzer 51 as an analyzer. The radiation monitor M2 is different from the first embodiment in that the radiation light emitting elements (the first and second radiation light emitting elements 10a and 10b) include plural kinds of rare earth elements that are different from each other and that emit lights of different wavelengths by means of incident radiation.

To put it concretely, in this embodiment, two kinds of rare earth elements are used as the above plural kinds of rare earth elements, and these two kinds of rare earth elements are housed in different housings (12a and 12b) respectively (one of the two kinds of rare earth elements is housed in the light emitting unit 14 of the housing 12a, and the other is housed in the light emitting unit 15 of the housing 12b).

Here, each of the first and second optical fibers 20a and 20b has the same configuration as the abovementioned optical fiber 20; each of the first and second wavelength selection filters 35a and 35b has the same configuration as the abovementioned wavelength selection filter 35; each of the first and second electrical pulse converters 30a and 30b has the same configuration as the abovementioned electrical pulse converter 30; and each of the first and second electrical pulse detectors 40a and 40b has the same configuration as the abovementioned electrical pulse detector 40. Therefore the explanations of the above components will be omitted because the explanations about the corresponding components of the first embodiment can be quoting.

A combination of rare earth elements included in the first and second radiation light emitting elements 10a and 10b is not limited to a special combination as long as these rare earth elements are different kinds from each other and emit lights of different wavelengths . For example, a combination of neodymium and cerium or other combinations can be adopted.

The analyzer 51 is an instrument that computes the dosage rate of radiation and the temperatures of the radiation light emitting elements 10a and 10b by aggregating the counting rates of electrical pulses detected by the first and second electrical pulse detectors 40a and 40b at each wavelength and collating this aggregated counting rate of the electrical pulses at each wavelength and the relationship of the counting rate of photons to the temperatures of the radiation light emitting elements 10a and 10b and the dosage rate of radiation stored in a database in advance.

In this way, the first and second radiation light emitting elements 10a and 10b include plural rare earth elements that emit lights of different wavelengths by means of incident radiation, hence lights of plural wavelengths can be surely obtained, and the dosage rate of the radiation and the temperatures of the radiation light emitting elements 10a and 10b can be measured more surely.

Furthermore, as shown by this embodiment, plural kinds of rare earth elements are housed in different housings respectively, so that lights of plural different wavelengths can be surely obtained, and the dosage rate of the radiation and the temperatures of the radiation light emitting elements 10a and 10b can be measured more surely.

### Third Embodiment

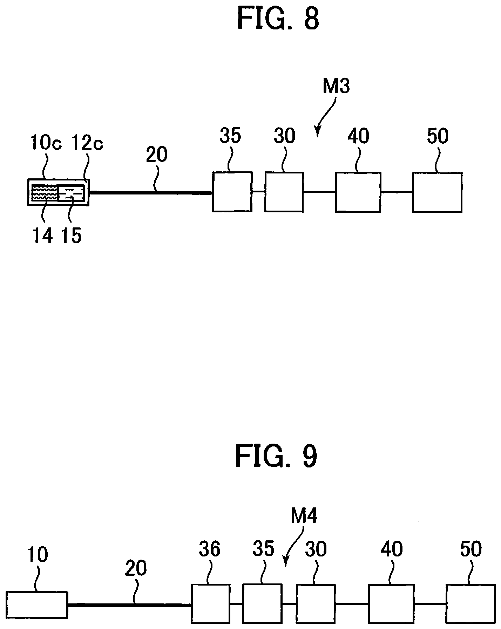

Fig. 8 is a schematic diagram showing a third embodiment of the present invention. Schematically speaking, as shown in Fig. 8, a radiation monitor M3 according to the third embodiment includes a radiation light emitting element 10c, an optical fiber 20, a wavelength selection filter 35, an electrical pulse converter 30, an electrical pulse detector 40, and an analyzer 50. The radiation monitor M3 is different from the second embodiment in that plural kinds of rare earth elements are housed in a single housing. Here, the components of this embodiment that are the same as the components of the first or second embodiments are given the same reference signs and the detailed explanation about the components will be omitted.

To put it concretely, two kinds of rare earth elements that are different from each other and that emit lights of different wavelengths are housed in a single housing 12c in the radiation light emitting element 10c of the radiation monitor M3 of this embodiment. Such a configuration of this embodiment is not limited to the above mentioned configuration as long as the lights of the abovementioned wavelengths enter into the optical fiber 20, and for example, a configuration in which the light emitting units 14 and 15 that respectively include some kinds of rare earth elements different from each other are disposed in series as shown in Fig. 8, a configuration in which a single light emitting unit that includes some kinds of rare earth elements different from each other in a united manner although this configuration is not shown, and the like can be cited.

Rare earth elements included in the radiation light emitting element 10c are not limited to special rare earth elements as long as the rare earth elements are different kinds from each other and emit lights of different wavelengths. For example, a combination of rare earth elements that is the same as a combination of rare earth elements described in the second embodiment can be adopted.

Since plural kinds of rare earth elements are housed in a single housing 12c as described above, the configuration of the radiation light emitting element 10c can be simplified, so that the radiation monitor M3 can be downsized.

### Fourth Embodiment

Fig. 9 is a schematic diagram showing a fourth embodiment of the present invention. A schematically speaking, as shown in Fig. 9, a radiation monitor M4 according to the fourth embodiment includes a radiation light emitting element 10, an optical fiber 20, a light attenuation filter 36, a wavelength selection filter 35, an electrical pulse converter 30, an electrical pulse detector 40, and an analyzer 50. The radiation monitor M4 is different from the first embodiment in that the radiation monitor M4 includes the light attenuation filter 36. Here, the components of this embodiment that are the same as the components of the first embodiment are given the same reference signs and the detailed explanation about the components will be omitted.

The light attenuation filter 36 is installed around the middle of the optical fiber 20, and attenuates light emitted from the radiation light emitting element 10 by a predefined ratio so that the intensity of the light falls within a predefined intensity range. As the light attenuation filter 36, an absorption light attenuation filter, a reflection attenuation filter, or the like can be adopted, for example.

As described above, since the radiation monitor M4 further includes the light attenuation filter 36, the radiation monitor M4 can improve the linearity between the intensity of light provided to the detection and the counting rate of electrical pulses detected, hence the relevant dosage rate can be measured more accurately.

Here, the radiation monitor of the present invention is not limited to the radiation monitor having the configuration described in any of the abovementioned embodiments, and the scope of the present invention is shown by the appended claims.

For example, in the above-described first to fourth embodiments, the radiation monitors M1, M2, M3, or M4 that includes one or two kinds of rare earth elements have been explained, but the number of kinds of rare earth elements is not limited to one or two as long as light of plural wavelengths is sent out from the rare earth elements. In other words, it is conceivable that the number of kinds of rare earth elements is three or more. In addition, it is conceivable that the abovementioned three or more kinds of rare earth elements are housed in a single housing or housed in two or more housings.

Furthermore, although, as an example of the deriving method of temperature and the like shown in Fig. 6, a deriving method that uses the counting rates of photons at three wavelengths λ1, λ2, and λ3 has been explained, it is conceivable that a deriving method that uses the counting rates of photons at two, four or more wavelengths is adopted.

In addition, although the radiation light emitting element 10 including the intermediate material 13 has been explained in the above-described first embodiment, if the light emission intensity caused by heat radiation from the inside of the housing 12 can be neglected in comparison with the light emission intensity of rare earth elements caused by radiation, it is not necessary to install the intermediate material 13 between the housing 12 and the light emitting unit 11.

Furthermore, although the radiation monitors M1 to M4 including the wavelength selection filters 35 respectively have been explained in the above-described embodiments, if the relevant S/N ratio is high enough for noise to be neglected, it is not necessary to install the wavelength selection filters 35.

In addition, although the radiation monitors M1 to M4 including the wavelength selection filters 35 respectively have been explained in the above-described embodiments, it is conceivable that a radiation monitor having a spectroscope (not shown) that is installed around the middle of the optical fiber and that disperses light emitted from the radiation light emitting element is installed instead of each of the wavelength selection filters 35. As the abovementioned spectroscope, a prism spectroscope, a grating spectroscope, or the like can be adopted.

As described above, since the spectroscope is installed in the radiation monitor, it becomes possible for the radiation monitor to surely obtain electrical pulses corresponding to the respective lights of plural wavelengths, so that the dosage rate can be measured more accurately.

### Industrial Applicability

The present invention can provide a radiation monitor that can easily and accurately measure the dosage rate of radiation while inhibiting the risk of explosions and the like and that can also measure the temperature of a radiation light emitting element itself. Therefore, the abovementioned radiation monitor can be suitably used as a monitor for monitoring the radiation and temperature of a nuclear reactor.

### List of Reference Signs

- M1 to M4:: Radiation Monitor
- 10, 10c:: Radiation Light Emitting Element
- 10a:: First Radiation Light Emitting Element
- 10b:: Second Radiation Light Emitting Element
- 11, 14, 15:: Light Emitting Unit
- 12, 12a:: Housing
- 13:: Intermediate Material
- 20:: Optical Fiber
- 30:: Electrical Pulse Converter
- 35:: Wavelength Selection Filter
- 36:: Light Attenuation Filter
- 40:: Electrical Pulse Detector
- 50, 51:: Analyzer

## Claims

1. A radiation monitor (M1 - M4) comprising:
a radiation Light Emitting Element (10, 10c) that contains a rare earth element and that emits light of a plurality of wavelengths caused by incident radiation;
an optical fiber (20) that is connected to the radiation Light Emitting Element (10, 10c) and that transmits the light emitted from the radiation Light Emitting Element (10, 10c);
an electrical pulse converter (30) that is connected to the optical fiber (20) and that converts the transmitted light to electrical pulses at each wavelength; and
an electrical pulse detector (40) that is connected to the electrical pulse converter (30) and that measures the counting rate of electrical pulses at each wavelength using the electrical pulses sent out from the electrical pulse converter (30); **characterized by**
an analyzer (50, 51) that is connected to the electrical pulse detector (40) and that computes the dosage rate of radiation and the temperature of the radiation Light Emitting Element (10, 10c) by collating the counting rate of electrical pulses measured at each wavelength and the relationship of the counting rate of photons to the temperature of the radiation Light Emitting Element (10, 10c) and the dosage rate of radiation stored in a database in advance.

2. The radiation monitor (M1 - M4) according to claim 1, wherein the radiation Light Emitting Element (10, 10c) includes a plurality of kinds of rare earth elements that are different from each other and emit lights of different wavelengths by means of incident radiation.

3. The radiation monitor (M1 - M4) according to claim 2, wherein the plurality of kinds of rare earth elements are housed in different housings (12, 12a) respectively.

4. The radiation monitor (M1 - M4) according to claim 2, wherein the plurality of kinds of rare earth elements are housed in a single housing (12,12a).

5. The radiation monitor (M1 - M4) according to any of claim 1 to claim 4, further comprising a wavelength selection filter (35) that is installed around the middle of the optical fiber (20) and that passes only light of a predefined wavelength emitted from the radiation Light Emitting Element (10, 10c).

6. The radiation monitor (M1 - M4) according to any of claim 1 to claim 4, further comprising a spectroscope that is installed around the middle of the optical fiber (20) and that disperses the light emitted from the radiation Light Emitting Element (10, 10c).

7. The radiation monitor (M1 - M4) according to any of claim 1 to claim 6, further comprising a light attenuating filter (36) that is installed around the middle of the optical fiber (20) and that attenuates the light emitted from the radiation Light Emitting Element (10, 10c) by a predefined ratio so that the intensity of the light falls within a predefined intensity range.

## Patentansprüche

1. Strahlungsmonitor (M1 - M4), umfassend:
- ein Strahlungslichtemissionselement (10, 10c), das Strahlungslicht emittiert, das ein Element der Seltenen Erden enthält und das Licht von mehreren Wellenlängen emittiert, die durch einfallende Strahlung verursacht werden;
- eine optische Faser (20), die mit dem Strahlungslichtemissionselement (10, 10c) verbunden ist und das von dem Strahlungslichtemissionselement (10, 10c) emittierte Licht durchlässt;
- einen elektrischen Impulsumsetzer (30), der mit der optischen Faser (20) verbunden ist und der das übertragene Licht bei jeder Wellenlänge in elektrische Impulse umsetzt; und
- einen elektrischen Impulsdetektor (40), der mit dem elektrischen Impulsumsetzer (30) verbunden ist und der die Zählrate von elektrischen Impulsen bei jeder Wellenlänge unter Verwendung der von dem elektrischen Impulsumsetzer (30) ausgesendeten elektrischen Impulse misst;
**gekennzeichnet durch**:
- einen Analysator (50, 51), der mit dem elektrischen Impulsdetektor (40) verbunden ist und der die Dosierungsrate der Strahlung und die Temperatur des Strahlungslichtemissionselements (10, 10c) durch Sammeln der Zählrate der elektrischen Impulse, die bei jeder Wellenlänge gemessen werden und das Verhältnis der Zählrate von Photonen zur Temperatur des Strahlungslichtemissionselements (10, 10c) und der in einer Datenbank gespeicherten Dosisrate der Strahlung im Voraus berechnet.

2. Strahlungsmonitor (M1 - M4) nach Anspruch 1, wobei das Strahlungslichtemissionselement (10, 10c) mehrere Arten von Elementen der Seltenen Erden enthält, die sich voneinander unterscheiden und mittels einfallender Strahlung Licht unterschiedlicher Wellenlänge emittieren.

3. Strahlungsmonitor (M1 - M4) nach Anspruch 2, wobei die mehrere Arten von Elementen der Seltenen Erden jeweils in verschiedenen Gehäusen (12, 12a) untergebracht ist.

4. Strahlungsmonitor (M1 - M4) nach Anspruch 2, wobei die mehrere Arten von Elementen der Seltenen Erden in einem einzigen Gehäuse (12, 12a) untergebracht ist.

5. Strahlungsmonitor (M1 - M4) nach einem der Ansprüche 1 bis 4, ferner umfassend:
- ein Wellenlängenselektionsfilter (35), das um die Mitte der optischen Faser (20) herum vorgesehen ist und das von dem Strahlungslichtemissionselement (10, 10c) nur Licht einer vordefinierten emittierten Wellenlänge durchlässt.

6. Strahlungsmonitor (M1 - M4) nach einem der Ansprüche 1 bis 4, ferner umfassend:
- ein Spektroskop, das um die Mitte der optischen Faser (20) herum vorgesehen ist und das von dem Strahlungslichtemissionselement (10, 10c) emittierte Licht streut.

7. Strahlungsmonitor (M1 - M4) nach einem der Ansprüche 1 bis 6, ferner umfassend:
- ein Lichtabschwächungsfilter (36), das um die Mitte der optischen Faser (20) herum vorgesehen ist und das von dem Strahlungslichtemissionselement emittierte Licht entsprechend eines vordefinierten Verhältnisses abschwächt, so dass die Intensität des Lichts in einen vordefinierten Intensitätsbereich fällt.

## Revendications

1. Dispositif de surveillance de rayonnement (M1 - M4) comprenant :
un élément émetteur de lumière de rayonnement (10, 10c) qui contient un élément en terre rare et qui émet de la lumière d'une pluralité de longueurs d'onde causées par un rayonnement incident ;
une fibre optique (20) qui est connectée à l'élément émetteur de lumière de rayonnement (10, 10c) qui transmet la lumière émise depuis l'élément émetteur de lumière de rayonnement (10, 10c) ;
un convertisseur d'impulsions électriques (30) qui est connecté à la fibre optique (20) et qui convertit la lumière transmise en impulsions électriques à chaque longueur d'onde ; et
un détecteur d'impulsions électriques (40) qui est connecté au convertisseur d'impulsions électriques (30) et qui mesure la cadence de comptage d'impulsions électriques à chaque longueur d'onde en utilisant les impulsions électriques envoyées depuis le convertisseur d'impulsions électriques (30), **caractérisé par**
un analyseur (50, 51) qui est connecté au détecteur d'impulsions électriques (40) et qui calcule le taux de dosage de rayonnement et la température de l'élément émetteur de lumière de rayonnement (10, 10c) en regroupant en relation la cadence de comptage d'impulsions électriques mesurées à chaque longueur d'onde et la relation entre la cadence de comptage de photons avec la température de l'élément émetteur de lumière de rayonnement (10, 10c), et le taux de dosage de rayonnement stocké dans une base de données en avance.

2. Dispositif de surveillance de rayonnement (M1 - M4) selon la revendication 1, dans lequel l'élément émetteur de lumière de rayonnement (10, 10c) inclut une pluralité de sortes d'éléments en terre rare qui sont différents les uns des autres et qui émettent des lumières de longueurs d'onde différentes au moyen d'un rayonnement incident.

3. Dispositif de surveillance de rayonnement (M1 - M4) selon la revendication 2, dans lequel la pluralité de sortes d'éléments en terre rare sont logés dans des boîtiers différents (12, 12a) respectivement.

4. Dispositif de surveillance de rayonnement (M1 - M4) selon la revendication 2, dans lequel la pluralité de sortes d'éléments en terre rare sont logés dans un seul boîtier (12, 12a).

5. Dispositif de surveillance de rayonnement (M1 - M4) selon l'une quelconque des revendications 1 à 4, comprenant en outre un filtre de sélection de longueurs d'ondes (35) qui est installé autour du milieu de la fibre optique (20) et qui fait passer uniquement de la lumière d'une longueur d'onde prédéfinie émise depuis l'élément émetteur de lumière de rayonnement (10, 10c).

6. Dispositif de surveillance de rayonnement (M1 - M4) selon l'une quelconque des revendications 1 à 4, comprenant en outre un spectroscope qui est installé autour du milieu de la fibre optique (20) et qui disperse la lumière émise depuis l'élément émetteur de lumière de rayonnement (10, 10c).

7. Dispositif de surveillance de rayonnement (M1 - M4) selon l'une quelconque des revendications 1 à 6, comprenant en outre un filtre atténuant la lumière (36) qui est installé autour du milieu de la fibre optique (20) et qui atténue la lumière émise depuis l'élément émetteur de lumière de rayonnement (10, 10c) à raison d'un rapport prédéfini de sorte que l'intensité de la lumière tombe à l'intérieur d'une plage d'intensité prédéfinie.
